# EUROPEAN PATENT SPECIFICATION

(11) **EP 1 203 188 B1**
(45) Date of publication and mention of the grant of the patent: **06.10.2004**
(21) Application number: 00946131.0
(22) Date of filing: 18.07.2000
(51) Int. Cl.: F23C 9/08, F23M 5/02, F23C 6/04, F23D 11/00

(54) **IMPROVED INDUSTRIAL BURNER FOR FUEL**
INDUSTRIEBRENNER FÜR BRENNSTOFFE
BRULEUR INDUSTRIEL DE CARBURANT AMELIORE

(30) Priority: 23.07.1999 GB 9917401; 30.12.1999 GB 9930814
(43) Date of publication of application: 08.05.2002
(73) Proprietor: Hotwork Combustion Technology Limited, Leeds LS1 2SP (GB)
(72) Inventor: Crowther, Brian, Middlestown, Near Wakefield WF4 4PH (GB); HOLMES, Michael, Sheffield S12 3LP (GB)
(74) Representative: Howson, Richard G.B.
(86) International application number: PCT/GB2000/002751
(87) International publication number: WO 2001/007833

(56) References cited:
- EP-A- 0 816 755
- DE-A- 2 144 805
- DE-A- 3 923 238
- US-A- 4 004 875
- US-A- 4 130 388
- US-A- 5 092 761
- US-A- 5 269 679
- US-A- 5 624 253
- PATENT ABSTRACTS OF JAPAN vol. 008, no. 274 (M-345), 14 December 1984 (1984-12-14) -& JP 59 145405 A (MITSUBISHI JUKOGYO KK), 20 August 1984 (1984-08-20)

## Description

The invention relates to an industrial burner for fuel. Compact regenerative combustion burners which use a high level of combustion air preheat were developed during the early 1980's. Typical applications for high velocity regenerative burners include forge re-heat furnaces and continuous re-heat furnaces which operate at very high temperatures, typically 1350°C, steel strip heat treatment lines and aluminium melting furnaces.

The environmental impact of oxides of nitrogen formed with high temperature combustion has limited the exploitation of such energy efficient combustion technology.

US-A-5092761 discloses a method and apparatus for reducing NOₓ emissions from furnace premix burners by recirculating flue gas. Flue gas is drawn from a furnace through pipes of the apparatus by the aspirating effect of fuel gas and combustion air passing through a venturi portion of a barrier tube of the apparatus. The flue gas mixes with combustion air in a primary chamber prior to combustion to dilute the concentration of O₂ in the combustion air. This lowers flame temperature and thereby reduces NOₓ emissions.

It is an object of the invention to provide a burner which causes little or no emission of NOₓ, even with compact regenerative combustion.

The invention is based on the realisation that by drawing waste gases into the supply of fuel before staged mixing there will be a reduction in NOₓ formation.

According to the invention in one aspect, there is provided a method of burning combustible fuel so as to cause low emissions of NOₓ, the method comprising:
- creating a high velocity stream of combustible fuel and passing it from a small diameter nozzle facing the inlet of a passageway leading to a furnace;
- combining the emergent stream with waste gas supplied from the furnace and passing the combined stream into the passageway which is of increased diameter whereby the combined stream expands in volume;
- directing the expanded stream through the main port of a hot baffle plate in an inlet of the furnace, the baffle plate having subsidiary ports adjacent the perimeter of the baffle plate;
- intersecting the expanded stream in the region of the baffle plate with a tangential flow of combustion air in order to stage the air supply and create a rotary disturbance in the mixture prior to passing through the main port to join the remainder of combustion air and waste gases in the furnace to complete the combustion.

In another aspect of the invention there is provided a burner accessory as defined in claim 7.

Preferably the dilution of the combustion air takes place by the induced principle within the furnace chamber, to maintain the minimum burner dimensions.

It is preferred to have metered air injection points. By incorporating metered air injection points any low inherent cold instability is overcome without jeopardising the NOₓ reduction at working temperature.

Preferably other parameters are controlled to reduce NOₓ and these include peak flame temperature, residence time at peak temperature and oxygen concentration within particular reaction zones.

Preferably the burner incorporates a quarl shaped to retain sufficient flame for UV scanning whilst also creating a high velocity discharge of reacting mixtures. The optimisation of both load penetration for melting and chamber circulation for product uniformity are maintained with this controlled discharge.

The flameless reaction is preferably controlled to provide a uniform heat flux which, when complemented with the desired velocity contours around the load, allows for uniform temperature control.

It is an advantage that the initial generation of the fuel rich mixture ensures stable combustion over the entire burner operating range. Preferably, the air flow is less than 10% of the flow required for stoichiometric combustion of the fuel at maximum flow.

The waste gas flow is preferably facilitated by either a venturi or jet pump effect via the fuel delivery velocity, or by an external delivery system, and is assisted by a low volume, high velocity air jet stream.

The tangential staged supply of combustion air allows for more stable combustion at low operating temperatures, i.e. below 800°C, in addition to swirling the outer layers of the air/fuel/waste gas mixture at higher temperatures. (The volume flow rate of this tangential air flow may be less than 20% of the air required for stoichiometric combustion.)

The cold air inlet allows for up to 20% of the air required for combustion to be supplied when below 800°C, at the position normally taken up by the induced waste gas flow when at higher temperatures.

The combustion air may be supplied pressurised by a fan system and can be either cold or preheated to temperatures in excess of 1000°C.

In order that the invention may be well understood it will now be described with reference to the accompanying diagrammatic drawings, in which:
Figure 1 is a sectional view showing an accessory mounted on a side of a furnace;
Figure 2 is a view of area ringed A in Figure 1, drawn to an enlarged scale showing the flow of waste gas by short arrows and the flow of fuel by large arrows;

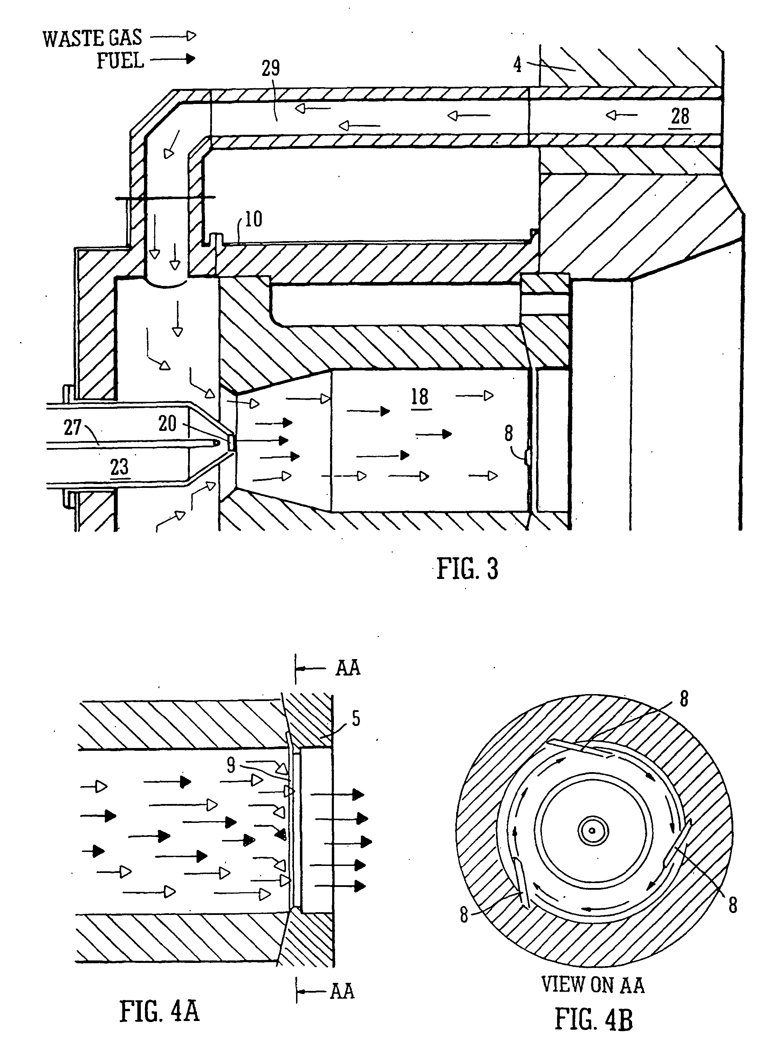

Figure 3 is a view showing the flow of fuel from the nozzle into the passage and waste gases being drawn into the fuel stream;
Figure 4A is a view showing the flow of the fuel and waste gas mixture to the baffle plate and Figure 4B is a sectional view taken on lines AA-AA on Figure 4A detailing the rotary disturbance created by the staging of the combustion air supply;
Figure 5 is an elevation of the baffle plate hot face and fuel lance, illustrating localised visible combustion;
Figure 6 shows the inside of the furnace downstream of the baffle plate showing the flows of combustion air, waste gas, and the combustible mixture with illustration of visible and flameless combustion.

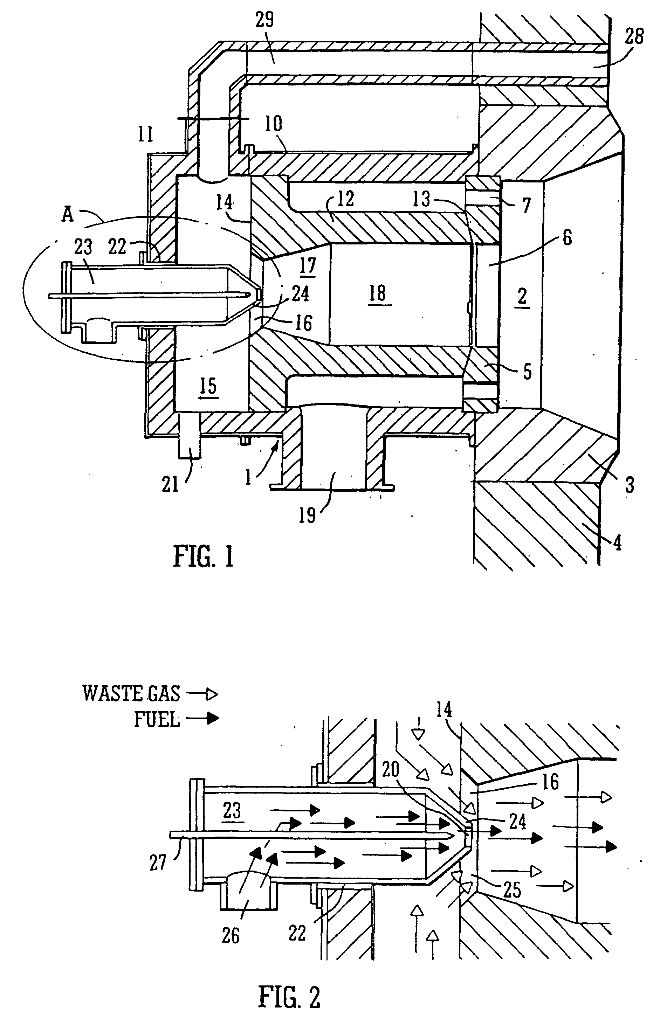

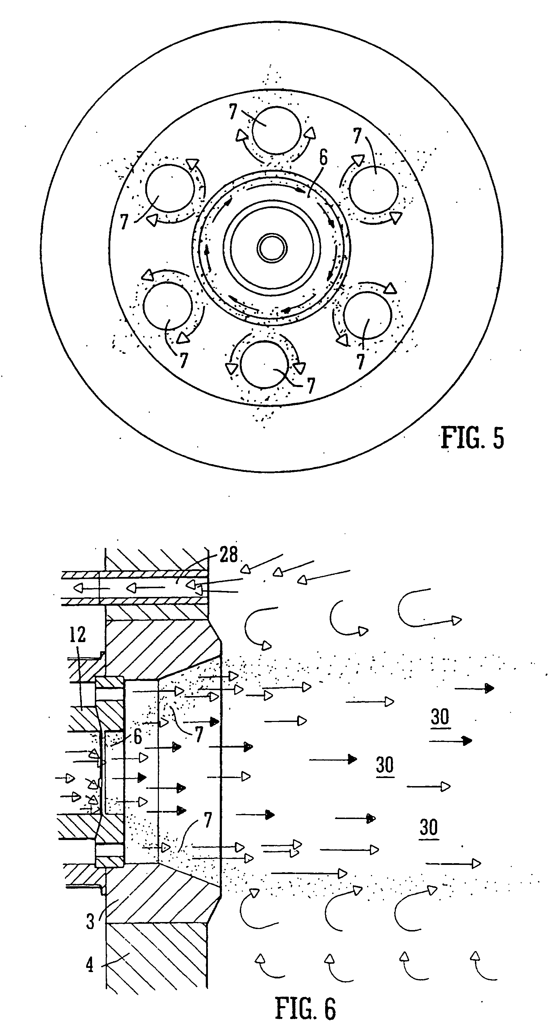

The burner shown in Figure 1 comprises a burner body 1 connected to an inlet 2 in the quarl 3 of a furnace wall 4 in sealed manner. The inlet 2 contains a circular baffle plate 5. As shown in Figure 5, the plate has a central relatively large port 6, and a plurality of radially spaced apart smaller ports 7 which are near the perimeter.

The body 1 comprises an outer casing 10 having an end wall 11. The casing houses a cylindrical refractory liner 12 the front end 13 of which sits on the baffle plate 5 in the region between the main centre port 6 and the row of outer subsidiary ports 7. The rear end of the liner is a wider diameter wall 14 which is spaced from the inner face of the end wall 11 to form a chamber 15.

The liner has an inlet port 16 which flares at 17 into a wider chamber 18. A port 19 in the side wall of the casing 10 is arranged to supply combustion air to the small ports 7 in the baffle plate. Two inlets are present in the end wall, one 21 being a cold start air supply inlet. A fuel lance 23 is mounted in an opening 22, and has a nose 24 which is frustoconical and projects in to the inlet port 16 of the liner 12 with a clearance 25 in between. The diameter of the nozzle is selected to discharge the fuel at a high, preferably the maximum, firing rate. A fuel supply inlet 26 is present in a side of the lance 23, and an air jet device 27 extends through the nozzle to stop short of the outlet end 20 of the fuel lance 23.

Passageway 28 is present in the wall 4 of the furnace and/or burner quarl 3 adjacent to the inlet 2, and leads to one or more passageways 29 which enter the chamber 15 formed by the end wall 11 of the casing and the facing rear wall 14 of the liner 12.

In use, fuel is supplied to the burner via the lance 23 and is forced through the single small diameter nozzle 20 to create a high velocity fuel stream, say about 80 to about 110 m/s, to induce a suction around the nozzle in the region 15. Air introduced via the air jet 27 at about 80 to about 120 m/s and maintains suction and initiates a combustible mixture at low flow rates, say about 10 to 13% of the maximum rating. The suction draws waste gases via passageways 29 into the fuel stream at the junction between the nozzle and burner liner 12, i.e. in the area 16. As a result high velocity fuel rich mixture is created at the entry to the burner by an air jet flowing a low volume, high velocity stream concentric. If a liquid fuel is used the air jet is mixed with the fuel flow. The flow of waste gas is taken from the furnace and introduced into the high velocity fuel rich stream to form a mixture of fuel, waste gas and air.

The gas stream flows forward axially of the burner and now comprising of fuel, air and waste gases is now allowed to expand within the area 18 of the liner 12 and intersect with a tangential flow of combustion air 9 (from the inlet 19) close to the exit into the furnace chamber near the baffle plate 5. The combustible mixture now further mixes on the perimeter of this stream with staged combustion air 8, on the upstream side of baffle plate 5, rotating the outer section of the stream 9. The baffle air will flow at up to about 40 m/s for cold air and up to about 300 m/s for heated air. In other words the partially reacting air/fuel/waste gas mixture is directed through an aperture in an air distribution baffle where the balance of the air required for complete combustion is delivered at high velocity. The remaining combustible mixture enters the furnace chamber at the burner baffle plate hot face and there expands and further proceeds to visibly burn local to the baffle air combustion streams 7. The resulting mixing of the fuel mixture with the balance of combustion air enables combustion to be completed within the confines of the retention quarl and furnace volume in an essentially flameless manner.

The velocity of the air streams exiting the baffle plate 5 induce waste gases into and so diluting the combustion air. Complete combustion does not occur until an equilibrium of velocities and mixture is achieved some way into the furnace chamber when flameless combustion 30 (Figure 6) takes place.

It can be seen that the invention provides an industrial burner and quarl assembly which generates reduced levels of oxides of nitrogen (NOₓ) emissions by premixing fuel and internally recirculated waste gases drawn directly from the furnace chamber to within the confines of the burner body prior to staged mixing with the air required for combustion. Dilution of fuel by waste gases is achieved within the confines of the burner body by venturi induction using a fuel lance. Both flame stability and the induction of waste gas diluent into the fuel stream are assisted at low fire rates by an air jet or jets.

The burner quarl is designed to maintain a stable flame pattern and to develop a high velocity discharge of the reacting mixture.

The fuel may be natural gas, liquid petroleum gas or a combustible gaseous industrial by-product. The fuel may also be a liquid or atomised liquid such as fuel oils.

The combustion air may be cold or pre-heated. Where appropriate, the combustion air is pre-heated in a compact regenerator directly attached to the burner body.

## Claims

1. A method of burning combustible fuel so as to cause low emissions of NOₓ, the method comprising:
a) creating a high velocity stream of combustible fuel and passing it from a small diameter nozzle (20) facing the inlet (16) of a passageway (18) leading to a furnace;
b) combining the emergent stream with waste gas supplied from the furnace and passing the combined stream into passageway (18) which is of increasing diameter whereby the combined stream expands in volume;
c) directing the expanded stream through the main port (6) of a hot baffle plate (5) in an inlet of the furnace, the baffle plate (5) having subsidiary ports (7) adjacent to the perimeter of the plate (5);
d) intersecting the expanded stream in the region of the baffle plate (5) with a tangential flow of combustion air in order to stage the air supply and create a rotary disturbance in the mixture prior to passing to the main port (6) to join the remainder of combustion air and waste gases in the furnace to complete the combustion.

2. A method according to claim 1, wherein the air flow is adjusted to ensure stable combustion over the entire burner operating range.

3. A method according to claim 1 or 2, wherein the high velocity fuel stream moves at from 80 to 120 m/s.

4. A method according to any one of claims 1 to 3, wherein the air is introduced at a flow rate of about 80 to 120 m/s.

5. A method according to any preceding claim, wherein the air in the region of the baffle plate (5) flows at about 40 m/s for cold air and about 300 m/s for heated air.

6. A method according to any preceding claim, wherein the combustion air is diluted by the induced principle.

7. A burner accessory for a furnace having an inlet (2) containing a baffle plate (5) having a main port (6) and subsidiary ports (7) which are located near the perimeter of the baffle plate (5), the accessory comprising:
a housing containing a small diameter nozzle (20) arranged to direct a high velocity air fuel and waste gas stream towards the inlet (16) of a passageway (18) having a wider diameter portion leading to the baffle plate (5);
means for supplying fuel to the nozzle (20) to provide the high velocity stream by utilising the delivery pressure of the fuel;
means (28, 29) for internally directing waste gases from the furnace to combine with the high velocity stream;
means (12) defining a physical barrier between the combustion air and the combined and expanded stream; and
means for passing combustion air to the passageway near the baffle plate via a liner containing the passageway, arranged to intersect the combined and expanded stream in the region of the baffle plate (5) with a tangential flow of combustion air in order to stage the air supply and create a rotary disturbance in the mixture prior to passing to the main port (6) to join the remainder of combustion air and waste gases in the furnace to complete the combustion.

## Patentansprüche

1. Verfahren zum Verbrennen von Brennstoff, um niedrige NOₓ-Emissionen zu erzielen, wobei das Verfahren umfasst:
a) Erzeugen eines Hochgeschwindigkeitsstroms aus Brennstoff und Ableiten des Stroms aus einer Düse (20) mit geringem Durchmesser, die dem Einlass (16) eines Durchgangs (18) gegenüberliegt, der zu einem Ofen führt;
b) Vereinigen des austretenden Stroms mit Abgas, das aus dem Ofen zugeführt wird, und Einleiten des vereinigten Stroms in den Durchgang (18), der einen sich vergrößernden Durchmesser hat, wobei sich der vereinigte Strom in seinem Volumen ausdehnt;
c) Führen des ausgedehnten Stroms durch die Hauptöffnung (6) eines warmen Prallblechs (5) in einen Einlass des Ofens, wobei das Prallblech (5) Hilfsöffnungen (7) hat, die an den Umfang des Blechs (5) angrenzen;
d) Schneiden des ausgedehnten Stroms in dem Bereich des Prallblechs (5) mit einem tangentialen Strom aus Verbrennungsluft, um die Luftzufuhr zu stufen und eine Rotationsstörung in dem Gemisch zu erzeugen, bevor es zu der Hauptöffnung (6) geleitet wird, um die Rückstände der Verbrennungsluft und der Abgase in dem Ofen zu verbinden und die Verbrennung abzuschließen.

2. Verfahren nach Anspruch 1, wobei der Luftstrom so eingestellt wird, dass er eine beständige Verbrennung für den gesamten Arbeitsbereich des Brenners sicherstellt.

3. Verfahren nach Anspruch 1 oder 2, wobei sich der Hochgeschwindigkeitsbrennstoffstrom mit 80 bis 120 m/s bewegt.

4. Verfahren nach einem der Ansprüche 1 bis 3, wobei die Luft mit einer Strömungsgeschwindigkeit von 80 bis 120 m/s eingeleitet wird.

5. Verfahren nach einem der vorhergehenden Ansprüche, wobei die Strömungsgeschwindigkeit der Luft in dem Bereich des Prallblechs (5) für kalte Luft etwa 40 m/s und für warme Luft etwa 300 m/s beträgt.

6. Verfahren nach einem der vorhergehenden Ansprüche, wobei die Verbrennungsluft nach dem Induktionsprinzip verdünnt wird.

7. Brennerzubehör für einen Ofen mit einem Einlass (2), der ein Prallblech (5) enthält, das eine Hauptöffnung (6) und Hilfsöffnungen (7) hat, die nahe dem Umfang des Prallblechs (5) angeordnet sind, wobei das Zubehör umfasst:
ein Gehäuse, das eine Düse (20) mit geringem Durchmesser enthält, die so angeordnet ist, dass sie einen Hochgeschwindigkeitsbrennstoffstrom und einen Abgasstrom zu dem Einlass (16) eines Druchgangs (18) führt, der einen zu dem Prallblech (5) führenden durchmessergrößeren Abschnitt hat;
Mittel zum Zuführen von Brennstoff zu der Düse (20), um den Hochgeschwindigkeitsstrom durch Nutzen des Förderdrucks des Brennstoffs zu bilden;
Mittel (28, 29) zum internen Abführen der Abgase aus dem Ofen, damit sich diese mit dem Hochgeschwindigkeitsstrom vereinen;
Mittel (12), die eine physikalische Grenze zwischen der Verbrennungsluft und dem vereinigten und ausgedehnten Strom definieren; und
Mittel, um die Verbrennungsluft über einen den Durchgang enthaltenden Liner zu dem Durchgang nahe dem Prallblech zu leiten, wobei die Mittel so angeordnet sind, dass sie den vereinigten und ausgedehnten Strom in dem Bereich des Prallblechs (5) mit einem tangentialen Strom aus Verbrennungluft schneiden, um die Luftzufuhr zu stufen und eine Rotationsstörung in dem Gemisch zu erzeugen, bevor es zu der Hauptöffnung (6) geleitet wird, um die Rückstände der Verbrennungsluft und der Abgase in dem Ofen zu verbinden und die Verbrennung abzuschließen.

## Revendications

1. Procédé pour brûler du carburant combustible de manière à provoquer des émissions réduites d'oxyde d'azote, le procédé comprenant :
a) créer un flux à vitesse élevée de carburant combustible et le faire passer d'une buse (20) d'un petit diamètre orientée vers l'entrée (16) d'un passage (18) menant à un four ;
b) combiner le flux qui émerge avec des gaz de combustion fournis par le four et faire passer le flux combiné dans un passage (18) dont le diamètre augmente par quoi le flux combiné s'expanse en volume ;
c) diriger le flux expansé à travers l'orifice principal (6) d'une tôle-chicane chaude (5) dans une entrée du four, la tôle-chicane (5) ayant des orifices secondaires (7) adjacents au périmètre de la tôle (5) ;
d) intersecter le flux expansé dans la région de la tôle-chicane (5) avec un écoulement tangentiel d'air de combustion pour organiser l'amenée d'air et pour créer une perturbation rotative dans le mélange avant le passage à l'orifice principal (6) pour réunir le restant de l'air de combustion et des gaz de combustion dans le four afin de compléter la combustion.

2. Procédé selon la revendication 1, où l'écoulement d'air est réglé pour assurer une combustion stable sur toute la plage de fonctionnement du brûleur.

3. Procédé selon la revendication 1 ou 2, où le flux de carburant à vitesse élevée se déplace de 80 à 120 m/s.

4. Procédé selon l'une des revendications 1 à 3, où l'air est introduit à une vitesse d'écoulement d'environ 80 à 120 m/s.

5. Procédé selon l'une des revendications précédentes, où l'air dans la région de la tôle-chicane (5) s'écoule à environ 40 m/s pour de l'air froid et à environ 300 m/s pour de l'air chauffé.

6. Procédé selon l'une des revendications précédentes, où l'air de combustion est dilué par le principe induit.

7. Accessoire de brûleur pour un four comportant une entrée (2) contenant une tôle-chicane (5) présentant un orifice principal (6) et des orifices secondaires (7) qui sont situés à proximité du périmètre de la tôle-chicane (5), l'accessoire comprenant :
un boîtier contenant une buse d'un petit diamètre (20) agencée pour diriger un flux de carburant et de gaz de combustion à vitesse élevée vers l'entrée (16) d'un passage (18) comportant une portion d'un plus grand diamètre menant à la tôle-chicane (5) ;
un moyen pour amener le carburant à la buse (20) afin de réaliser un flux à vitesse élevée en utilisant la pression d'émission du carburant ;
un moyen (28,29) pour diriger intérieurement les gaz de combustion du four pour qu'ils se combinent avec le flux à vitesse élevée ;
un moyen (12) définissant une barrière physique entre l'air de combustion et le flux combiné et expansé ; et
un moyen pour faire passer l'air de combustion au passage près de la tôle-chicane par une chemise contenant le passage, agencé pour intersecter le flux combiné et expansé dans la région de la tôle-chicane (5) avec un écoulement tangentiel de l'air de combustion pour organiser l'amenée d'air et pour créer une perturbation rotative dans le mélange avant la passage à l'orifice principal (6) pour réunir le restant de l'air de combustion et des gaz de combustion dans le four afin de compléter la combustion.
